# FASCICULE DE BREVET EUROPEEN

(11) **EP 3 327 297 B1**
(45) Date de publication et mention de la délivrance du brevet: **04.09.2019**
(21) Numéro de dépôt: 17202204.8
(22) Date de dépôt: 17.11.2017
(51) Int. Cl.: F16B 2/08, F16B 7/04

(54) **DISPOSITIF POUR ARRIMER UN ELEMENT SUR UN CONDUIT, ENSEMBLE, INSTALLATION ET PROCEDE DE MISE EN OEUVRE**
VORRICHTUNG ZUM BEFESTIGEN EINES ELEMENTS AUF EINER LEITUNG, ANORDNUNG, INSTALLATION UND UMSETZUNGSVERFAHREN
DEVICE FOR SECURING A MEMBER TO A PIPE, IMPLEMENTATION ASSEMBLY, INSTALLATION AND METHOD

(30) Priorité: 23.11.2016 FR 1661376
(43) Date de publication de la demande: 30.05.2018
(73) Titulaire: Financiere de Beaumont- FDB, 26100 Romans (FR)
(72) Inventeur: COURBIS, Hervé, 26100 Romans-sur-Isère (FR)
(74) Mandataire: Cabinet Laurent & Charras

(56) Documents cités:
- EP-A1- 2 058 575
- WO-A1-2005/068154
- FR-A1- 2 480 875
- FR-A1- 2 505 010
- US-A- 1 483 192
- US-A1- 2003 028 148
- US-A1- 2008 201 915
- US-A1- 2009 241 300

## Description

La présente invention concerne un dispositif pour arrimer un élément sur un conduit. L'invention concerne également un ensemble comprenant un tel dispositif, et une installation comprenant un tel ensemble. L'invention concerne également un procédé de mise en oeuvre d'un tel dispositif.

Le domaine de l'invention est celui des conduits, tels que les pipelines sous-marins pour le transport d'hydrocarbures.

Dans ce domaine, il est connu de fixer différents éléments le long des conduits, qui peuvent s'étendre sur plusieurs centaines de kilomètres, sur terre, sous terre et/ou sous l'eau. A titre d'exemples non limitatifs, ces éléments peuvent être des câbles électriques, des systèmes de capteurs, ou des supports pour la fixation de câbles. Concernant ce dernier exemple, il est en effet préférable d'interposer un élément support entre le conduit et les câbles.

En pratique, l'élément arrimé sur le conduit doit rester en place pendant toute la durée de vie de ce conduit, par exemple 25 ans. L'élément immergé en profondeur doit résister aux pressions, aux variations de températures, aux courants, à la faune et à la flore marines, etc.

De plus, il est remarquable que le conduit immergé se rétracte progressivement au cours du temps sous l'effet des contraintes auxquelles il est soumis, c'est-à-dire que son diamètre diminue progressivement. Si l'élément est arrimé sur le conduit à l'aide d'une sangle sous tension, alors la tension dans la sangle se relâche lorsque le conduit se rétracte, de sorte que l'élément n'est plus maintenu en place.

Le document FR 2 965 252 décrit un exemple de système d'arrimage, conçu pour fixer une charge sur un véhicule de transport. Ce système comprend une sangle tissée et un dispositif compensateur de perte de tension. Cependant, ce système présente une construction complexe et n'est pas adapté à l'arrimage d'un élément sur un conduit immergé.

Le document EP 2 058 575 A1 décrit un dispositif correspondant au préambule de la revendication 1. Le dispositif comprend un organe compensateur collé, soudé ou accroché sur les premières extrémités de brins. En alternative, les brins et l'organe compensateur sont formés d'une seule pièce.

Le but de la présente invention est de proposer un dispositif remédiant aux inconvénients ci-dessus.

A cet effet, l'invention a pour objet un dispositif pour l'arrimage d'un élément sur un conduit, le dispositif comprenant
- un organe compensateur en matériau élastique, et
- deux brins qui s'étendent chacun entre une première extrémité solidaire de l'organe compensateur et une deuxième extrémité libre ;
où les brins sont aptes, par jonction des deuxièmes extrémités, à former une sangle prévue pour arrimer l'élément au conduit ; et
où l'organe compensateur est, d'une part, extensible lorsque le dispositif est mis sous tension autour du conduit et, d'autre part, rétractable progressivement au cours du temps pour maintenir la sangle en tension lorsque le conduit se rétracte ;
caractérisé en ce que l'organe compensateur est surmoulé sur les premières extrémités des brins ;
et en ce que les premières extrémités comportent des évidements recevant de la matière de l'organe compensateur lors du surmoulage.

Ainsi, l'invention permet de compenser la perte de tension dans la sangle du fait de la rétractation du conduit, et maintenir l'élément arrimé sur le conduit. L'organe compensateur permet d'apporter de la souplesse et de l'élasticité au dispositif d'arrimage, en comparaison avec un dispositif constitué seulement d'une sangle rigide.

Selon d'autres caractéristiques avantageuses de l'invention, prises isolément ou en combinaison :
- Le dispositif est dépourvu de pièce métallique.
- Le dispositif comprend un système de jonction des extrémités distales des brins pour former la sangle prévue pour arrimer l'élément au conduit.
- Les évidements comprennent des creux formés en alternance entre des créneaux.
- Les évidements comprennent des orifices traversant entre deux faces opposées des premières extrémités.
- L'organe compensateur comprend une portion médiane et deux portions d'extrémités recevant les premières extrémités des brins, les portions d'extrémités présentant des sections transversales plus grandes que la section transversale de la portion médiane.
- L'organe compensateur comprend des portions intermédiaires présentant des sections transversales variant progressivement entre la portion médiane et les portions d'extrémités.
- L'organe compensateur est en polyuréthane.
- Les deux brins sont en matériau non élastique dans les conditions normales de température et de pression (CNTP).

L'invention a également pour objet un ensemble, comprenant : un dispositif tel que mentionné ci-dessus, et un élément prévu pour être arrimé à un conduit en mettant en oeuvre le dispositif.

L'invention a également pour objet une installation, comprenant : au moins un ensemble tel que mentionné ci-dessus, au moins une pièce fixée à l'élément, et un conduit supportant l'ensemble et la pièce.

L'invention a également pour objet un procédé de mise en oeuvre d'un dispositif tel que mentionné ci-dessus. Le procédé est caractérisé en ce qu'il comprend les étapes suivantes :
a) lorsque le dispositif est mis sous tension autour d'un conduit, l'organe compensateur est étiré sous l'effet de la traction exercée par la sangle ; puis
b) lorsque le conduit se rétracte progressivement au cours du temps, l'organe compensateur se rétracte également de sorte que la sangle est maintenue en tension.

Selon un mode de réalisation particulier, le conduit est destiné à être immergé, et l'organe compensateur est rétractable progressivement au cours du temps pour maintenir la sangle en tension lorsque le conduit se rétracte en immersion.

Dans ce cas, l'ensemble est un ensemble submersible, comprenant un dispositif tel que mentionné ci-dessus, et un élément prévu pour être arrimé à un conduit en mettant en oeuvre le dispositif. Pour sa part, l'installation comprend au moins un ensemble submersible tel que mentionné ci-dessus, au moins une pièce fixée à l'élément, et un conduit supportant l'ensemble submersible et la pièce.

Selon un autre mode de réalisation particulier, le conduit est destiné à être enterré, et l'organe compensateur est rétractable progressivement au cours du temps pour maintenir la sangle en tension lorsque le conduit se rétracte sous terre.

L'invention sera mieux comprise à la lecture de la description qui va suivre, donnée uniquement à titre d'exemple non limitatif et faite en référence aux dessins annexés sur lesquels :
- la figure 1 est une vue en perspective d'un dispositif d'arrimage conforme à l'invention ;
- la figure 2 est une coupe longitudinale partielle, à plus grande échelle, du dispositif de la figure 1 ;
- la figure 3 est une vue de dessus partielle, à plus grande échelle et partiellement en transparence, du dispositif de la figure 1 ;
- la figure 4 est une vue à plus grande échelle du détail IV de la figure 2 ;
- la figure 5 est une vue à plus grande échelle du détail V de la figure 3 ;
- la figure 6 est une vue de face d'une installation comprenant un dispositif d'arrimage conforme à l'invention, un conduit cylindrique, un élément support arrimé au conduit en mettant en oeuvre le dispositif, et un câble fixé à l'élément support ;
- la figure 7 est une vue de côté selon la flèche VII de la figure 6 ;
- la figure 8 est une vue analogue à la figure 6, montrant le conduit et le dispositif d'arrimage qui se sont rétractés après plusieurs années de service ; et
- la figure 9 est une vue de côté selon la flèche IX de la figure 8.

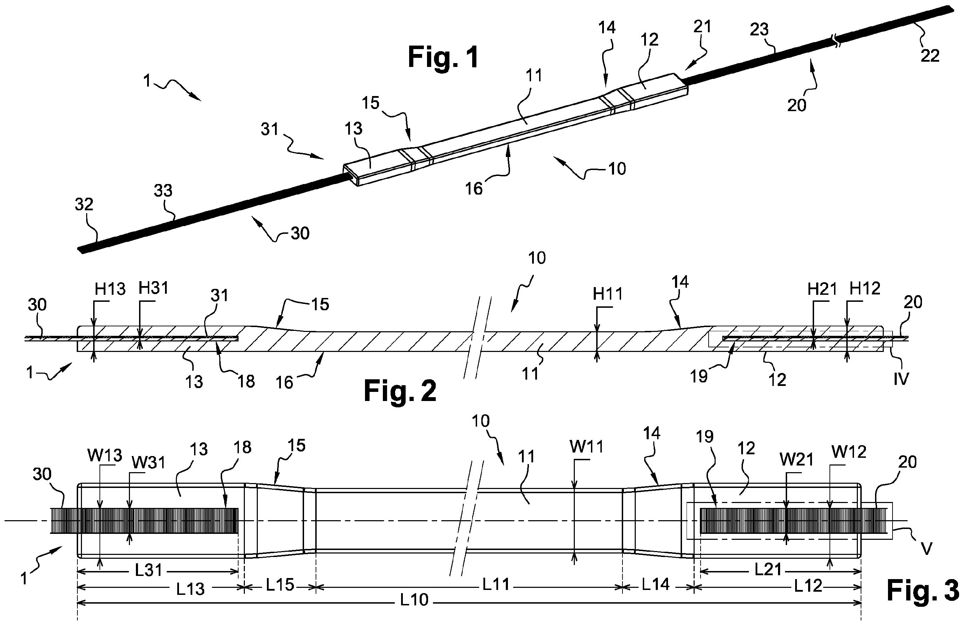

Sur les figures 1 à 9 est représenté un dispositif d'arrimage 1 conforme à l'invention. Le dispositif 1 comprend un organe compensateur 10, ainsi que deux brins 20 et 30 aptes à former une sangle 40.

Sur les figures 1 à 5, le dispositif 1 est montré seul au repos, sans contraintes mécaniques exercées sur ses éléments constitutifs.

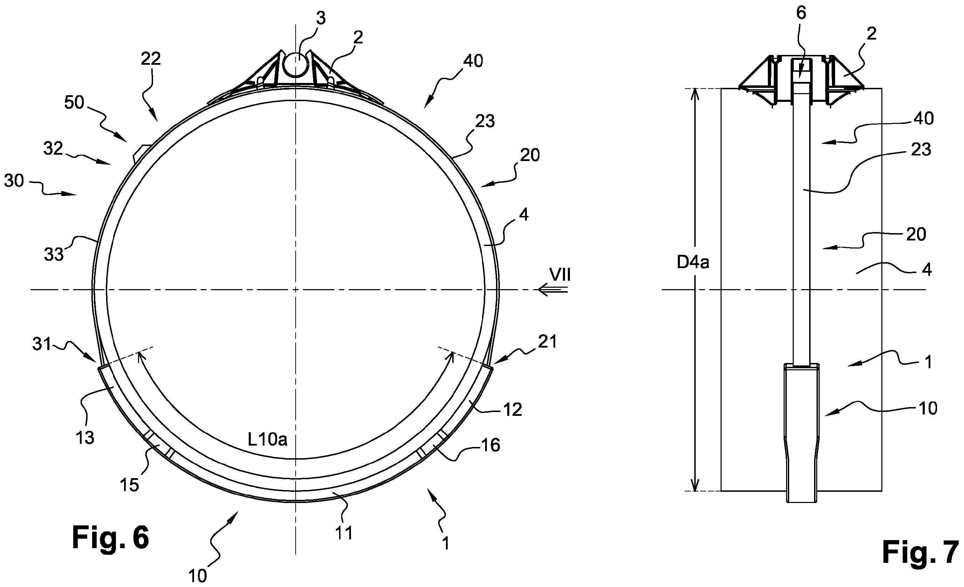

Sur les figures 6 à 9, le dispositif 1 est montré en service, dans le cadre de l'arrimage d'un élément support 2 de câble 3 sur un conduit 4. En alternative, l'élément 2 peut supporter plusieurs câbles 3. Selon une autre alternative, l'élément 2 peut être de tout autre type adapté à l'application visée. Par ailleurs, au lieu d'un câble 3, l'élément 2 peut recevoir tout autre type de pièce, généralement allongée, telle qu'une gaine ou un tuyau.

L'élément 2 est monobloc, formé d'une seule pièce en matière plastique. De préférence, l'organe 10 est en élastomère de polyuréthane, tel que connu sous la marque COURBHANE du Demandeur. L'élément 2 est arrimé sur le conduit 4 grâce au dispositif 1, notamment grâce au passage de la sangle 40 à travers une ouverture 6 ménagée à cet effet dans l'élément 2.

Le câble 3 peut être un câble électrique ou de transfert de données numériques.

Le conduit 4 est un tube de métal, de préférence recouvert d'une couche d'isolant, par exemple en polypropylène.

L'organe 10 est monobloc, formé d'une seule pièce en matériau plastique. De préférence, l'organe 10 est en polyuréthane.

L'organe 10 comprend une portion médiane 11, deux portions d'extrémités 12 et 13, et deux portions intermédiaires 14 et 15 formés entre la portion médiane 11 et les portions d'extrémités 12 et 13, respectivement. L'organe 10 comporte une surface inférieure 16 qui s'étend sur toute sa longueur et est destinée à venir en appui contre la surface externe du conduit 4.

Au repos, l'organe 10 présente une longueur L10. La portion 11 présente une longueur L11, une largeur W11 et une hauteur H11. La portion 12 présente une longueur L12, une largeur W12 et une hauteur H12. La portion 13 présente une longueur L13, une largeur W13 et une hauteur H13. La portion 14 présente une longueur L14, une largeur variable entre les largeurs W11 et W12, et une hauteur variable entre les hauteurs H11 et H12. La portion 15 présente une longueur L15, une largeur variable entre les largeurs W11 et W13, et une hauteur variable entre les hauteurs H11 et H13.

De préférence, l'organe 10 est symétrique par rapport à un plan central transversal. Ainsi, la portion 12 présente des dimensions L12, W12 et H12 identiques aux dimensions L13, W13 et H13 de la portion 13, et la portion 14 présente des dimensions L14, W14 et H14 identiques aux dimensions L15, W15 et H15 de la portion 15.

La longueur L11 est supérieure aux longueurs L12 et L13, elles-mêmes supérieures aux longueurs L14 et L15. La largeur W11 est inférieure aux largeurs W12 et W13. De même, la hauteur H11 est inférieur aux hauteurs H12 et H13. Par conséquent, les portions 12 et 13 présentent des sections transversales plus grandes que la section transversale de la portion 11. Pour leur part, les portions 14 et 15 présentent des sections transversales variant progressivement entre la portion 11 et les portions 12 et 13. Toutes les sections transversales des portions 11-15 sont parallélépipédiques.

Du fait de ses dimensions inférieures et donc de sa résistance mécanique inférieure, c'est principalement la portion 11 qui est étirée lorsque l'organe 10 est soumis à des contraintes de traction sur ses deux portions d'extrémités 12 et 13.

Chaque brin 20 et 30 est monobloc, formé d'une seule pièce. Les brins 20 et 30 sont en matériau rigide, non élastique dans les conditions normales de température et de pression (CNTP). Le matériau des brins 20 et 30 est choisi selon un compromis entre résistance et souplesse. Les brins 20 et 30 peuvent être en matériau plastique, métallique, composite, tissu ou toute autre matière adaptée à l'application visée.

Le brin 20 s'étend entre deux extrémités 21 et 22 reliées par une partie courante 23. De même, le brin 30 s'étend entre deux extrémités 31 et 32 reliées par une partie courante 33. Les extrémités 21 et 31 sont solidaires de l'organe 10, plus précisément des portions 12 et 13, respectivement. Les extrémités 22 et 32 sont initialement libres, et prévues pour être jointes fermement grâce au système de jonction 50, de sorte que les brins 20 et 30 forment la sangle 40.

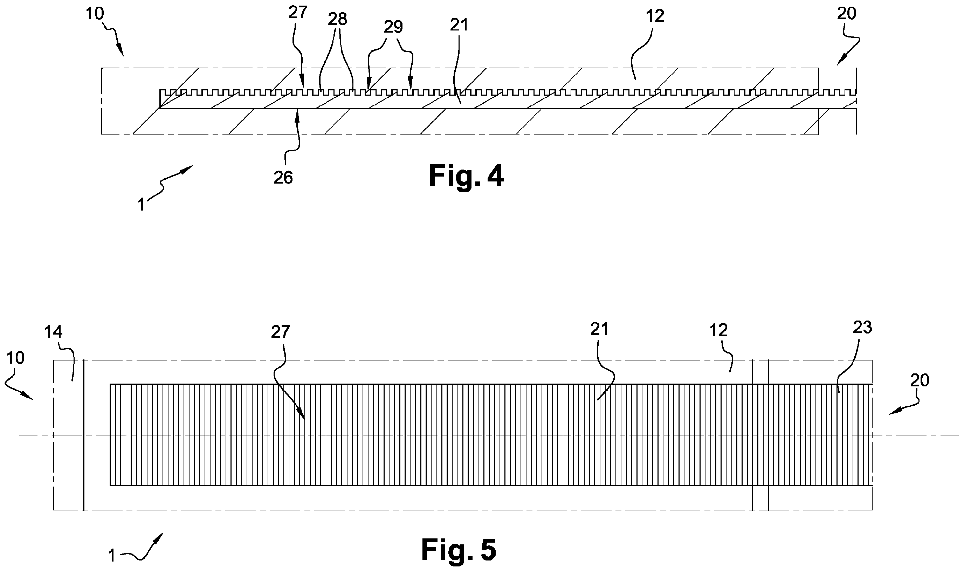

Les extrémités 21 et 31 sont solidarisées aux portions 12 et 13 par surmoulage. Autrement dit, l'organe 10 est surmoulé sur les extrémités 21 et 31 des brins 20 et 30. Comme montré aux figures 4 et 5 pour le brin 20, l'extrémité 21 comporte une face lisse 26 et une face crénelée 27. La face 27 comporte un relief constitué par une alternance de créneaux 28 en saillie et d'évidements 29 en creux entre les créneaux 28. Les évidements 29 reçoivent la matière de l'organe 10 lors du surmoulage, ce qui permet de créer une liaison rigide entre l'organe 10 et le brin 20. Les explications données ci-dessus pour l'extrémité 21 sont également valable pour l'extrémité 31.

Les évidements 29 peuvent être munies d'orifices traversant entre les faces 26 et 27. La matière de l'organe 10 est alors reçue dans ces orifices lors du surmoulage.

L'extrémité 21 logée dans la portion 12 présente une longueur L21, une largeur W21 et une hauteur H21. De même l'extrémité 31 logée dans la portion 13 présente une longueur L31, une largeur W31 et une hauteur W31. De préférence, chaque brin 20 et 30 présente des dimensions uniformes sur toute sa longueur, des extrémités 21 et 31 jusqu'aux extrémités 22 et 32. Encore de préférence, les dimensions L21, W21 et H21 sont égales aux dimensions L31, W31 et H31.

De préférence, la longueur L21 est supérieure à 90% de la longueur L12, la largeur W21 est comprise entre 20 et 40% de la largeur W12, et la hauteur H21 est comprise entre 10 et 20% de la hauteur H12. Il en est de même pour la portion 13 et l'extrémité 31.

En pratique, lorsque le dispositif 1 est positionné autour du conduit 4, les brins 20 et 30 sont disjoints et le brin 20 est passé à travers l'ouverture 6 formée dans l'élément 2.

Comme montré aux figures 6 et 7, les brins 20 et 30 sont alors solidarisés à leurs extrémités 22 et 32 grâce au système 50, ce qui permet de former la sangle 40 autour du conduit 4. Initialement, le conduit 4 présente un diamètre D4a. Les brins 20 et 30 sont ensuite mis sous tension au niveau du système 50, de manière à resserrer la sangle 40 autour du conduit 4, et ainsi plaquer l'élément 2 contre le conduit 4. Les contraintes de traction exercées par les brins 20 et 30 sur les portions 12 et 13 provoquent l'allongement de l'organe 10. A ce stade, l'organe 10 présente une longueur L10a supérieure à sa longueur L10 au repos.

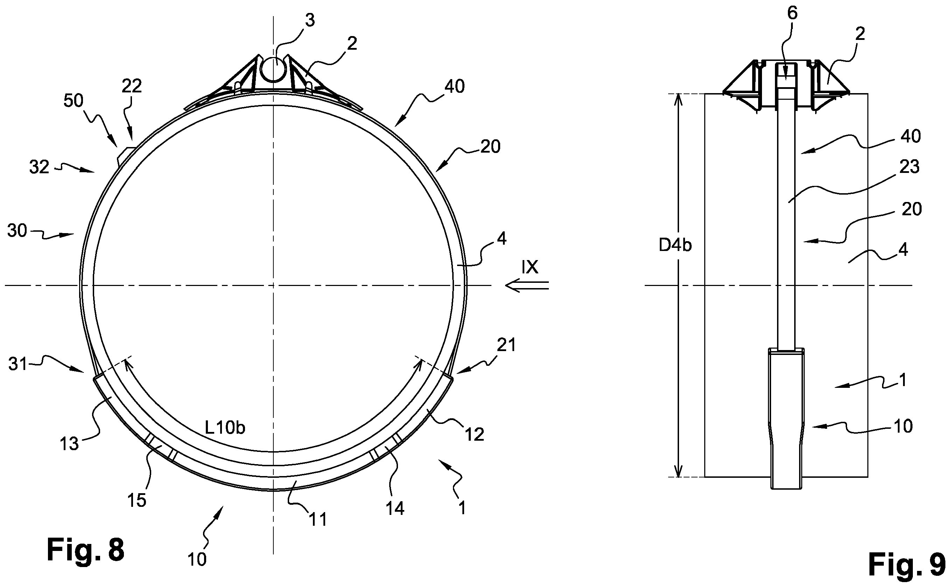

Comme montré aux figures 8 et 9, le conduit 4 se rétracte progressivement au cours du temps, de sorte que son diamètre D4a diminue jusqu'à un diamètre D4b. A titre d'exemple, après 25 ans en immersion, le diamètre D4b peut atteindre 90% du diamètre D4a. Du fait de ses propriétés d'élasticité, l'organe 10 se rétracte progressivement en accompagnant la rétractation du conduit 4. Ainsi la sangle 40 reste maintenue en tension, et l'élément 2 reste plaqué contre le conduit 4. L'organe 10 présente alors une longueur L10b inférieure à sa longueur initiale L10a, mais supérieure à sa longueur L10 au repos.

Ainsi, l'invention permet de compenser la perte de tension dans la sangle 40 du fait de la rétractation du conduit 4, et maintenir l'élément 2 arrimé sur le conduit 4. L'organe compensateur 10 permet d'apporter de la souplesse et de l'élasticité au dispositif d'arrimage 1, en comparaison avec un dispositif constitué seulement d'une sangle rigide.

Par ailleurs, le dispositif 1 et l'ensemble 1+2 peuvent être conformés différemment des figures 1 à 9 sans sortir du cadre de l'invention telle que déterminée par les revendications. En outre, les caractéristiques techniques des différentes variantes mentionnées ci-dessus peuvent être, en totalité ou pour certaines d'entre elles, combinées entre elles. Ainsi, le dispositif 1 peut être adapté en termes de coût, de fonctionnalités et de performance.

## Revendications

1. Dispositif (1) pour arrimer un élément (2) sur un conduit (4), le dispositif (1) comprenant :
- un organe compensateur (10) en matériau élastique, et
- deux brins (20, 30) qui s'étendent chacun entre une première extrémité (21, 31) solidaire de l'organe compensateur (10) et une deuxième extrémité (22, 32) libre ;
où les brins (20, 30) sont aptes, par jonction des deuxièmes extrémités (22, 32), à former une sangle (40) prévue pour arrimer l'élément (2) au conduit (4) ; et
où l'organe compensateur (10) est, d'une part, extensible lorsque le dispositif (1) est mis sous tension autour du conduit (4) et, d'autre part, rétractable progressivement au cours du temps pour maintenir la sangle (40) en tension lorsque le conduit (4) se rétracte ;
**caractérisé en ce que** l'organe compensateur (10) est surmoulé sur les premières extrémités (21, 31) des brins (20, 30) ;
et **en ce que** les premières extrémités (21, 31) comportent des évidements (29) recevant de la matière de l'organe compensateur (10) lors du surmoulage.

2. Dispositif (1) selon la revendication 1, **caractérisé en ce que** les évidements (29) comprennent des creux formés en alternance entre des créneaux (28).

3. Dispositif (1) selon l'une des revendications 2 ou 3, **caractérisé en ce que** les évidements (29) comprennent des orifices traversant entre deux faces (26, 27) opposées des premières extrémités (21, 31).

4. Dispositif (1) selon l'une des revendications précédentes, **caractérisé en ce que** l'organe compensateur (10) comprend une portion médiane (11) et deux portions d'extrémités (12, 13) recevant les premières extrémités (21, 31) des brins (20, 30), les portions d'extrémités (12, 13) présentant des sections transversales plus grandes que la section transversale de la portion médiane (11).

5. Dispositif (1) selon l'une des revendications précédentes, **caractérisé en ce que** l'organe compensateur (10) comprend des portions intermédiaires (14, 15) présentant des sections transversales variant progressivement entre la portion médiane (11) et les portions d'extrémités (12, 13).

6. Dispositif (1) selon l'une des revendications précédentes, **caractérisé en ce que** l'organe compensateur (10) est en polyuréthane.

7. Dispositif (1) selon l'une des revendications précédentes, **caractérisé en ce que** les deux brins (20, 30) sont en matériau non élastique dans les conditions normales de température et de pression.

8. Ensemble (1, 2), comprenant :
- un dispositif (1) selon l'une des revendications 1 à 7, et
- un élément (2) prévu pour être arrimé à un conduit (4) en mettant en oeuvre le dispositif (1).

9. Installation (1, 2, 3, 4), comprenant :
- au moins un ensemble (1, 2) selon la revendication 8,
- au moins une pièce (3) fixée à l'élément (2), et
- un conduit (4) supportant l'ensemble (1, 2) et la pièce (3).

10. Procédé de mise en oeuvre d'un dispositif (1) selon l'une des revendications 1 à 7, **caractérisé en ce que** le procédé comprend les étapes suivantes :
a) lorsque le dispositif (1) est mis sous tension autour d'un conduit (4), l'organe compensateur (10) est étiré sous l'effet de la traction exercée par la sangle (40) ; puis
b) lorsque le conduit (4) se rétracte progressivement au cours du temps, l'organe compensateur (10) se rétracte également de sorte que la sangle (40) est maintenue en tension.

## Patentansprüche

1. Vorrichtung (1) zur Verankerung eines Elementes (2) auf einer Rohrleitung (4), wobei diese Vorrichtung (1) umfasst:
- ein Ausgleichsorgan (10) aus elastischem Material, und
- zwei Schenkel (20, 30), die sich jeweils zwischen einem ersten Endstück (21, 31), das fest mit dem Ausgleichsorgan (10) verbunden ist und einem freien zweiten Endstück (22, 32) befinden;
wobei die Schenkel (20, 30) in der Lage sind, durch Verbindung der zweiten Endstücke (22, 32) einen Gurt (40), vorgesehen zur Verankerung des Elementes (2) auf der Rohrleitung (4), zu bilden und
wobei das Ausgleichsorgan (10) erstens ausziehbar ist, wenn die Vorrichtung (1) um die Rohrleitung (4) gespannt wird und zweitens in der Zeit progressiv zusammenschiebbar um den Gurt (40) gespannt zu halten, wenn sich die Rohrleitung (4) zusammenzieht;
**dadurch gekennzeichnet, dass** das Ausgleichsorgan (10) über die ersten Endstücke (21, 31) der Schenkel (20, 30) überformt ist;
und dadurch, dass die beiden ersten Endstücke (21, 31) Aussparungen (29) enthalten, die das Material des Ausgleichsorgans (10) bei der Überformung aufnehmen.

2. Vorrichtung (1) gemäß Anspruch 1, **dadurch gekennzeichnet, dass** die Aussparungen (29) Hohlräume umfassen, die alternierend zwischen den Zinnen (28) geformt sind.

3. Vorrichtung (1) nach einem der vorstehenden Ansprüche 2 oder 3, **dadurch gekennzeichnet, dass** diese Aussparungen (29) Öffnungen enthalten, die zwischen zwei Seiten (26, 27) hindurchführen, die gegenüber den ersten Endstücken (21, 31) liegen.

4. Vorrichtung (1) nach einem der vorstehenden Ansprüche, **dadurch gekennzeichnet, dass** das Ausgleichsorgan (10) einen medianen Abschnitt (11) und zwei Endabschnitte (12, 13) umfasst, die die ersten Endstücke (21, 31) der Schenkel (20, 30), aufnehmen; wobei die Endabschnitte (12, 13) Querschnitte aufweisen, die größer sind als der Querschnitt des medianen Abschnitts (11).

5. Vorrichtung (1) nach einem der vorstehenden Ansprüche, **dadurch gekennzeichnet, dass** das Ausgleichsorgan (10) Zwischenabschnitte (14, 15) umfasst, deren Querschnitte sich progressiv zwischen dem medianen Abschnitt (11) und den Endabschnitten (12, 13) verändern.

6. Vorrichtung (1) nach einem der vorstehenden Ansprüche, **dadurch gekennzeichnet, dass** das Ausgleichsorgan (10) aus Polyurethan besteht.

7. Vorrichtung (1) nach einem der vorstehenden Ansprüche, **dadurch gekennzeichnet, dass** die beiden Schenkel (20, 30) aus unter normalen Temperatur- und Druckbedingungen nicht elastischem Material bestehen.

8. Einheit (1, 2), umfassend:
- eine Vorrichtung (1) nach einem der Ansprüche 1 bis 7, und
- ein Element (2), vorgesehen zur Verankerung an einer Rohrleitung (4) unter Einsatz der Vorrichtung (1).

9. Anlage (1, 2, 3, 4), umfassend:
- mindestens eine Einheit (1, 2) gemäß Anspruch 8.
- mindestens ein Teil (3), befestigt am Element (2) und
- eine Rohrleitung (4), die die Einheit (1, 2) und das Teil (3) trägt.

10. Verfahren zur Umsetzung einer Vorrichtung (1) nach einem der Ansprüche 1 bis 7, **dadurch gekennzeichnet, dass** das Verfahren die folgenden Schritte umfasst:
a) wird die Vorrichtung (1) um eine Rohrleitung (4) gespannt, wird das Ausgleichsorgan (10) unter der Wirkung des vom Gurt (40) ausgeübten Zugs gestreckt; danach,
b) wenn die Rohrleitung (4) sich im Laufe der Zeit nach und nach zusammenzieht, zieht sich auch das Ausgleichsorgan (10) zusammen, so dass der Gurt (40) gespannt gehalten wird.

## Claims

1. Device (1) for securing an element (2) on a pipe (4), the device (1) comprising:
- a compensating member (10) made from an elastic material, and
- two strands (20, 30) that each extend between a first end (21, 31) secured to the compensating member (10) and a second free end (22, 32);
where the strands (20, 30) are able, by junction of the second ends (22, 32), to form a strap (40) provided to secure the element (2) to the pipe (4); and
where the compensating member (10) is, on the one hand, stretchable when the device (1) is tightened around the pipe (4), and on the other hand, shrinkable gradually over time to keep the strap (40) taut when the pipe (4) shrinks;
**characterized in that** the compensating member (10) is overmolded on the first ends (21, 31) of the strands (20, 30);
and **in that** the first ends (21, 31) have recesses (29) receiving material from the compensating member (10) during overmolding.

2. Device (1) according to claim 1, **characterized in that** the recesses (29) comprise hollows formed alternately between slots (28).

3. Device (1) according to any of claims 2 or 3, **characterized in that** the recesses (29) comprise openings passing between two opposite faces (26, 27) of the first ends (21, 31).

4. Device (1) according to one of the preceding claims, **characterized in that** the compensating member (10) comprises a median portion (11) and two end portions (12, 13) receiving the first ends (21, 31) of the strands (20, 30), the end portions (12, 13) having cross-sections larger than the cross-section of the median portion (11).

5. Device (1) according to one of the preceding claims, **characterized in that** the compensating member (10) comprises intermediate portions (14, 15) having cross-sections varying gradually between the median portion (11) and the end portions (12, 13).

6. Device (1) according to any of the preceding claims, **characterized in that** the compensating member (10) is made from polyurethane.

7. Device (1) according to one of the preceding claims, **characterized in that** the two strands (20, 30) are made from an inelastic material under normal temperature and pressure conditions.

8. Assembly (1, 2), comprising:
- a device (1) according to one of claims 1 to 7, and
- an element (2) provided to be secured to a pipe (4) by using the device (1).

9. Installation (1, 2, 3, 4) comprising:
- at least one assembly (1, 2) according to claim 8,
- at least one part (3) fastened to the element (2), and
- a pipe (4) supporting the assembly (1, 2) and the part (3).

10. Method for implementing a device (1) according to one of claims 1 to 7, **characterized in that** the method comprises the following steps:
a) when the device (1) is tightened around a pipe (4), the compensating member (10) is stretched under the effect of the traction exerted by the strap (40); then
b) when the pipe (4) gradually shrinks over time, the compensating member (10) also shrinks such that the strap (40) is kept taut.
